# EUROPEAN PATENT SPECIFICATION

(11) **EP 3 967 638 B1**
(45) Date of publication and mention of the grant of the patent: **06.11.2024**
(21) Application number: 21191533.5
(22) Date of filing: 16.08.2021
(51) Int. Cl.: B65H 31/02, B65H 83/02, B65H 3/12, B65H 1/06

(54) **SHEET CONVEYANCE APPARATUS, CORRESPONDING STORAGE MEDIUM STORING A CONTROL PROGRAM, AND CONTROL METHOD OF A SHEET CONVEYANCE APPARATUS**
BLATTFÖRDERVORRICHTUNG, ENTSPRECHENDES SPEICHERMEDIUM MIT DARAUF GESPEICHERTEM STEUERPROGRAMM, UND STEUERVERFAHREN FÜR EINE BLATTFÖRDERVORRICHTUNG
APPAREIL DE TRANSPORT DE FEUILLES, SUPPORT D'ENREGISTREMENT STOCKANT UN PROGRAMME DE COMMANDE CORRESPONDANT, ET PROCÉDÉ DE COMMANDE D'UN APPAREIL DE TRANSPORT DE FEUILLES

(30) Priority: 08.09.2020 JP 2020150839
(43) Date of publication of application: 16.03.2022
(73) Proprietor: Horizon Inc., Takashima-shi, Shiga 520-1501 (JP)
(72) Inventor: AOKI, Eiji, Shiga, 520-1501 (JP)
(74) Representative: Lippert Stachow Patentanwälte Rechtsanwälte

(56) References cited:
- EP-A1- 3 964 462
- EP-A1- 4 032 838
- EP-A1- 4 043 375
- US-A- 5 088 713
- US-A- 5 485 261
- US-A- 5 857 137
- US-B1- 6 567 644

## Description

### [Technical Field]

The present invention relates to a sheet conveyance apparatus that conveys sheets discharged from an upstream sheet processing apparatus to a downstream sheet processing apparatus, a control method of a sheet conveyance apparatus, and a storage medium storing a control program of the sheet conveyance apparatus.

### [Background Art]

In a binding process, a sheet conveyance apparatus is used so that sheets discharged from an upstream sheet processing apparatus (a printing machine or the like) are conveyed to a downstream sheet processing apparatus (a binding apparatus or the like), which improves productivity. The sheet conveyance apparatus is connected to the upstream sheet processing apparatus and the downstream sheet processing apparatus.

In such a case, the sheet conveyance apparatus supplies sheets such that the upstream sheet processing apparatus and the downstream sheet processing apparatus have a synchronized processing timing.

The processing speed of the upstream sheet processing apparatus and the processing speed of the downstream sheet processing apparatus are not the same in general. For example, when the processing speed of the upstream sheet processing apparatus is higher than the processing speed of the downstream sheet processing apparatus, the sheet conveyance apparatus is required to temporarily accumulate sheets and then convey the accumulated sheets to the downstream so as to synchronize the conveying timing with the processing timing of the downstream sheet processing apparatus.

A conventional sheet conveyance apparatus is disclosed in PTL 1, for example. As illustrated in Fig. 18 of PTL 1, the sheet conveyance apparatus has a conveying belt 3 having a plurality of airflow holes and a suction box 6. The sheet conveyance apparatus temporarily accumulates sheets 1 on the conveying belt 3 in a sheet accumulation area. The sheet conveyance apparatus then produces a negative pressure in the suction box 6 to cause the sheets 1 to be sucked on the conveying belt 3 by the airflow holes, and rotates the conveying belt 3 to convey the sheets 1 one by one.

### [Citation List]

### [Patent Literature]

[PTL 1]
   Japanese Patent Application Laid-Open H3-272931
[PTL 2]
   US 6,567,644 B1 discloses an automatic both-side feed unit being incorporated in a copy machine which automatically reverses paper sheets, each having its one side printed with an image by the printing section, and re-feeds them to the printing section. The automatic both-side feed unit has a stacker for containing, in a stacked manner, paper sheets, each having passed through the printing section and hence having its one side printed with an image, stacking rollers for introducing paper sheets into the stacker, a stacking gate for pressing, in a stacking direction, the paper sheets stacked in the stacker, a pickup roller for sequentially picking up the paper sheets, stacked in the stacker, in a reverse direction, beginning from the lowest one, and a paper re-feed conveyance path for re-feeding each paper sheet picked up by the pickup roller, to the printing section. Side guides are operated when each paper sheet is in a released state assumed after the rear end of the sheet passes through the stacking rollers and before the sheet is stacked by the stacking gate, thereby aligning paper sheets introduced into the stacker.
[PTL 3]
   US 5,485,261A discloses an image forming apparatus capable of double-sided or overlay copying at high speed. While a sheet having initially copied a first original document is still being transported to an intermediate tray inside the apparatus, an image forming operation on a second document is started, and one of the initially copied sheets in the intermediate tray starts to be refed therefrom for secondary copying. If the designated number of copying sheets is larger than a predetermined value and when the number of times the image forming operation is performed has exceeded that value, the start of the subsequent image forming operation is delayed by a predetermined time so as to provide the currently transported sheet with an extended distance relative to the preceding sheet.
[PTL 4]
   US 5,857,137A discloses a copying machine which has a function to contain sheets, each of which has an image on a first side, in a refeeding unit and refeed the sheets for forming an image on a second side. The refeeding unit has an intermediate tray, a pick-up roller for refeeding the sheets one by one and a containing section for feeding the sheets to the intermediate tray. Each of the sheets is fed into the intermediate tray by a first or a second roller of the containing section. The containing section is movable along a transporting way and set at such a position that the first and the second roller are positioned corresponding to the size of sheets to be contained in the intermediate tray.
[PTL 5]
   US 5,088,713A discloses a paper refeeding device incorporated in an image forming apparatus for temporarily stacking paper sheets each coming out of an image forming section and carrying an image on one side on a refeed tray and, then, refeeding the paper sheets to the image forming section. An air velocity switching mechanism causes an air knife to blow air at a breeze velocity or a zero velocity which does not lift the paper sheets stacked on the refeed tray, until more than a predetermined number of paper sheets have been discharged by discharge rollers and stacked on the refeed tray.

### [Summary of Invention]

### [Technical Problem]

In such an apparatus, if all the sheets accumulated in the sheet accumulation area have been conveyed out and there is no sheet on the conveying belt, and then if a next sheet enters the sheet accumulation area, the next sheet may be caught on the conveying belt, and may be fold or jammed (sheet jam) .

The object to be achieved by the present invention is to provide a sheet conveyance apparatus and a control method of a sheet conveyance apparatus that enable a sheet to enter a sheet accumulation area without being caught on a conveying belt and to provide a control program for the sheet conveyance apparatus.

### [Solution to Problem]

The sheet conveyance apparatus according to the first aspect of the present invention is a sheet conveyance apparatus that conveys a sheet fed out of an upstream sheet processing apparatus to a downstream sheet processing apparatus, the sheet conveyance apparatus comprising: a conveying unit configured to convey the sheet; a conveying unit drive mechanism configured to drive the conveying unit; a sheet accumulation area in which the sheet fed out of the upstream sheet processing apparatus is accumulated on the conveying unit; and a control unit configured to control conveyance of the sheet performed by the conveying unit.

The control unit includes a counter unit configured to count the number of sheets accumulated in the sheet accumulation area, and when a conveyance instruction signal for conveying the sheet from the sheet accumulation area is received and the number of the sheets currently accumulated in the sheet accumulation area is counted to be one by the counter unit, the control unit stops conveyance of the one sheet without conveying the one sheet from the sheet accumulation area until a next sheet is guided onto the one sheet.

In the sheet conveyance apparatus described above, the control unit may include a sheet number determination unit (named "first determination unit") that may determine, based on a count of the sheets by the counter unit, whether the number of the sheets currently accumulated in the sheet accumulation area is two or greater, or one. When it is determined by the first determination unit that the number of the sheets currently accumulated in the sheet accumulation area is two or greater, the control unit may convey the sheet from the sheet accumulation area.

In the sheet conveyance apparatus described above, the control unit may include a final sheet determination unit (named "second determination unit") that may determine whether or not the sheet currently accumulated in the sheet accumulation area is a final sheet to be processed. When it is determined by the second determination unit that the sheet currently accumulated in the sheet accumulation area is the final sheet to be processed, the control unit may perform control to convey the sheet from the sheet accumulation area.

In the sheet conveyance apparatus described above, in response to receiving information on the number of the sheets to be processed from the upstream sheet processing apparatus, the second determination unit may determine, based on the count of the sheets by the counter unit, whether or not the sheet accumulated in the sheet accumulation area is the final sheet to be processed.

In the sheet conveyance apparatus described above, an airflow hole may be formed in the conveying unit, and the sheet conveyance apparatus may include a suction switch mechanism configured to switch whether or not to suck the sheet on the conveying unit through the airflow hole.

The control method of a sheet conveyance apparatus according to the second aspect of the present invention is a control method of a sheet conveyance apparatus that conveys a sheet fed out of an upstream sheet processing apparatus to a downstream sheet processing apparatus, the sheet conveyance apparatus comprises: a conveying unit that conveys the sheet, a conveying unit drive mechanism that drives the conveying unit, and a sheet accumulation area in which the sheet fed out of the upstream sheet processing apparatus is accumulated on the conveying unit, and the control method comprising: when a conveyance instruction signal for conveying the sheet from the sheet accumulation area is received and the number of sheets currently accumulated in the sheet accumulation area is counted to be one, stopping conveyance of the one sheet without conveying the one sheet from the sheet accumulation area until a next sheet is guided onto the one sheet.

The third aspect of the present invention is a non-transitory computer readable storage medium storing a control program that causes the control unit comprised in the sheet conveyance apparatus of the first aspect to control said sheet conveyance apparatus.

### [Advantageous Effects of Invention]

The sheet conveyance apparatus according to the present invention enables a sheet to enter the sheet accumulation area without being caught on the conveying unit.

### [Brief Description of Drawings]

[Fig. 1]

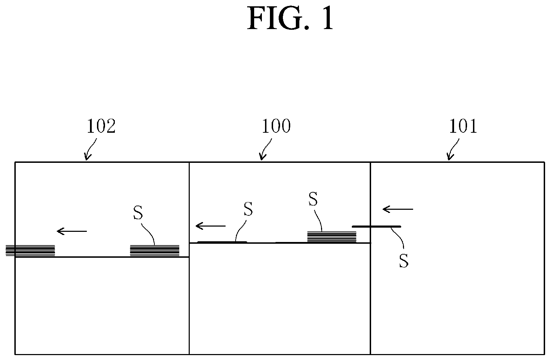

   Fig. 1 is a side view illustrating a sheet conveyance apparatus and a sheet processing apparatus according to one embodiment of the present invention.
[Fig. 2A]

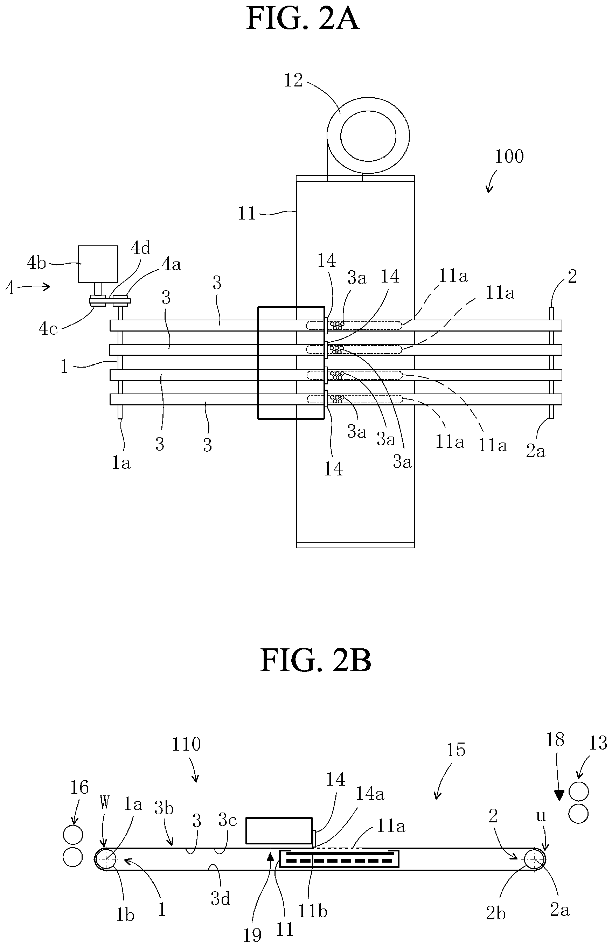

   Fig. 2A is a plan view of the sheet conveyance apparatus according to one embodiment of the present invention.
[Fig. 2B]
   Fig. 2B is a side view of the sheet conveyance apparatus according to one embodiment of the present invention.
[Fig. 3]

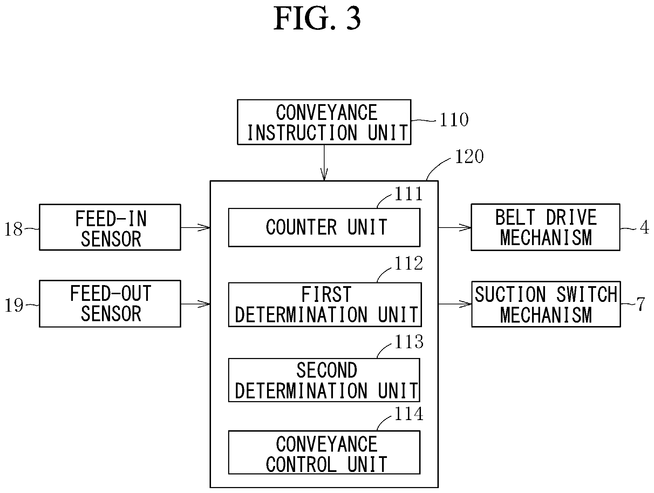

   Fig. 3 is a block diagram illustrating a configuration of a part of the sheet conveyance apparatus according to one embodiment of the present invention.
[Fig. 4A to Fig. 4C]

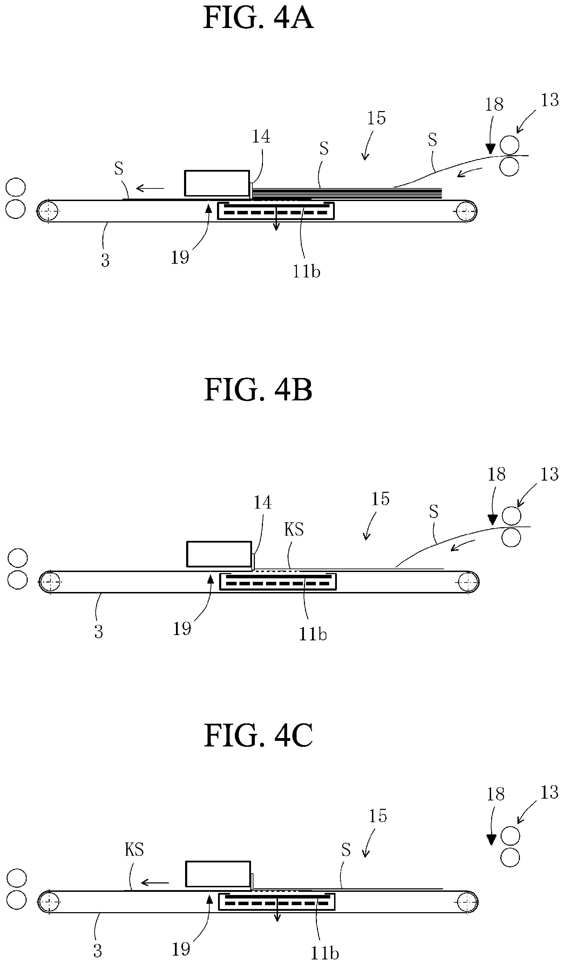

   Fig. 4A to Fig. 4C are side views illustrating the operation of the sheet conveyance apparatus according to one embodiment of the present invention.
[Fig. 5]

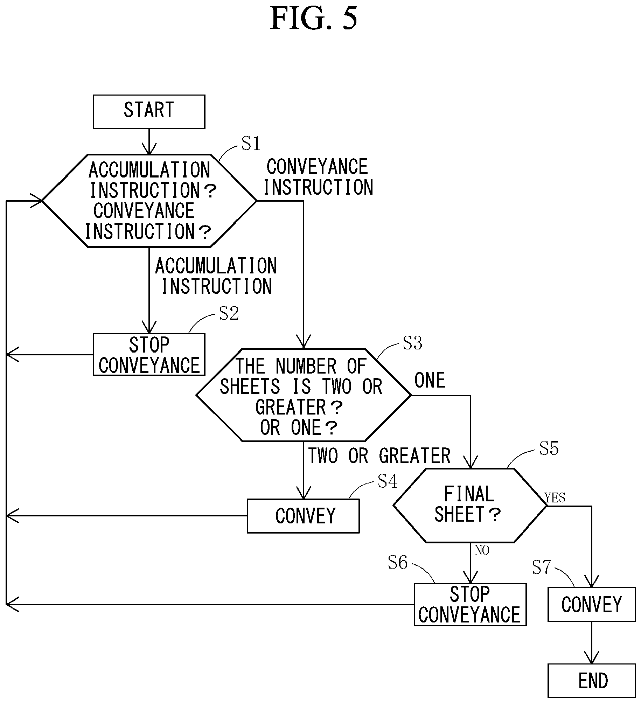

   Fig. 5 is a flowchart diagram illustrating the operation of the sheet conveyance apparatus according to one embodiment of the present invention.

### [Description of Embodiments]

Embodiments of a sheet conveyance apparatus according to the present invention will be described below with reference to the drawings.

### [Configuration]

The configuration of a sheet conveyance apparatus 100 will be described with reference to Fig. 1 to Fig. 3.

As illustrated in Fig. 1, the sheet conveyance apparatus 100 is connected to an upstream sheet processing apparatus (a printing machine or the like) 101 and a downstream sheet processing apparatus (a binding apparatus or the like) 102. The sheet conveyance apparatus 100 conveys sheets S, which have been discharged from the upstream sheet processing apparatus 101, to the downstream sheet processing apparatus 102 such that the upstream sheet processing apparatus 101 and the downstream sheet processing apparatus 102 have a synchronized processing timing.

As illustrated in Fig. 2, the sheet conveyance apparatus 100 has a drive roller 1 and an idle roller 2 extending parallel to each other and horizontally, four endless conveying belts (a conveying unit) 3 extended between the drive roller 1 and the idle roller 2, and a belt drive mechanism 4 that rotates the drive roller 1.

The drive roller 1 has a horizontal rotary shaft 1a and four first pulleys 1b arranged spaced apart from each other in the axial direction of the rotary shaft 1a. The first pulleys 1b are integrally attached to the rotary shaft 1a in a rotatable manner.

The idle roller 2 has a shaft 2a parallel to the rotary shaft 1a of the drive roller 1 and four second pulleys 2b rotatable about the shaft 2a. The second pulleys 2b are each arranged facing the four first pulleys 1b.

Each conveying belt 3 is extended between the first pulley 1b of the drive roller 1 and the second pulley 2b of the idle roller 2. Each conveying belt 3 has a plurality of airflow holes 3a at predetermined intervals over the entire length.

The belt drive mechanism 4 has a pulley 4a fixed to one end of the rotary shaft 1a of the drive roller 1, a motor 4b having a drive shaft parallel to the drive roller 1, a pulley 4c fixed to the drive shaft of the motor 4b, and an endless belt 4d extended between the pulley 4a and the pulley 4c.

In the sheet conveyance apparatus 100, the four conveying belts 3 rotate at a constant speed in response to rotation of the drive roller 1 driven by the motor 4b, and the sheets S placed on a conveying face 3b of the four conveying belts 3 are conveyed from the idle roller 2 (upstream) toward the drive roller 1 (downstream). Thus, the conveying belt 3 is formed of a material having a large friction coefficient (for example, a natural resin, a synthetic resin) in order to prevent sliding of the sheet S.

The sheet conveyance apparatus 100 has a suction switch mechanism 7 (Fig. 3) configured to switch whether or not to suck the sheet S on the conveying belts 3 via the airflow holes 3a of the conveying belts 3. The suction switch mechanism 7 has a suction box 11 arranged between an upper section 3c and a lower section 3d of the four conveying belts 3 and a suction fan (an intake source) 12 directly connected to the suction box 11. The suction fan (intake source) 12 is configured to generate a negative pressure in the suction box 11.

The suction box 11 has four intake holes 11a in the upper face. Each intake hole 11a is arranged facing the upper section 3c of each conveying belt 3. The suction box 11 further has a shutter 11b that opens and closes the intake holes 11a.

The suction switch mechanism 7 has a shutter drive mechanism that drives the shutter 11b. For example, the shutter drive mechanism has a lift mechanism (not illustrated) attached to the shutter 11b and a motor (not illustrated) attached to the lift mechanism. During the operation of the sheet conveyance apparatus 100, while a suction fan 12 is continuously operated, the shutter 11b is moved vertically by the lift mechanism, and the shutter 11b opens and closes at predetermined timings to switch suction through the intake holes 11a.

As illustrated in Fig. 2B, the sheet conveyance apparatus 100 has a feed-in roller 13 on the upstream. The feed-in roller 13 is provided above the upstream end u of the conveying face 3b of the conveying belts 3 and takes in and conveys the sheet S onto the conveying face 3b. The sheet conveyance apparatus 100 further has a stopper plate 14 extending upward from the conveying face 3b.

In this embodiment, the stopper plate 14 is divided into four portions in the width direction orthogonal to the longitudinal direction of the conveying belt 3, and the portions of the stopper plate 14 correspond to respective conveying belts 3. Note that the stopper plate 14 may be a single plate extending across the whole conveying face 3b of the four conveying belts 3.

A lower end 14a of the stopper plate 14 faces the suction box 11 and is arranged spaced apart from the conveying face 3b by a predetermined spacing.

The sheet conveyance apparatus 100 has a sheet accumulation area 15 that is a region from the stopper plate 14 above the conveying face 3b to the upstream end u of the conveying face 3b.

The sheet conveyance apparatus 100 has a feed-out roller 16 on the downstream. The feed-out roller 16 receives the sheet S from the downstream end w of the conveying face 3b and discharges the received sheet S to the outside of the sheet conveyance apparatus 100.

During the operation of the sheet conveyance apparatus 100, the sheets S are taken in from the upstream sheet processing apparatus 101 by the feed-in roller 13. The front end of the sheet S collides with the stopper plate 14, and the sheet S is sequentially accumulated in the sheet accumulation area 15. The lowermost sheet S out of the accumulated sheets S is then sequentially adsorbed on the conveying face 3b of the conveying belts 3 by the suction box 11 and separated from the remaining sheets S. The lowermost sheet S is then conveyed through the gap between the conveying face 3b and the stopper plate 14 to the downstream end w of the conveying face 3b by the conveying belts 3 and supplied to the downstream sheet processing apparatus 102 by the feed-out roller 16.

In such a way, even when the processing speed of the upstream sheet processing apparatus 101 and the processing speed of the downstream sheet processing apparatus 102 are different, the sheet conveyance apparatus 100 can temporarily accumulate the sheets S sequentially discharged from the upstream sheet processing apparatus 101 in the sheet accumulation area 15. Then, the sheet conveyance apparatus 100 can supply the lowermost sheet S out of the accumulated sheets S from the sheet accumulation area 15 to the downstream sheet processing apparatus 102 one by one at timings synchronized with the processing speed of the downstream sheet processing apparatus 102. Therefore, the sheet conveyance apparatus 100 can smoothly hand over the sheet S from the upstream processing apparatus 101 to the downstream sheet processing apparatus 102.

As illustrated in Fig. 2 and Fig. 3, the sheet conveyance apparatus 100 has a feed-in sensor 18 provided downstream of the feed-in roller 13. The feed-in sensor 18 is configured to detect the sheet S fed into the sheet accumulation area 15. The sheet conveyance apparatus 100 further has a feed-out sensor 19 provided downstream of the stopper plate 14. The feed-out sensor 19 is configured to detect the sheet S fed out of the sheet accumulation area 15.

As illustrated in Fig. 3, the sheet conveyance apparatus 100 has a control unit 120 connected to the feed-in sensor 18, the feed-out sensor 19, the belt drive mechanism 4, and the suction switch mechanism 7. The control unit 120 is formed of, for example, a central processing unit (CPU), a random access memory (RAM), a read only memory (ROM), a computer readable storage medium, and the like. Further, a series of processes to implement respective functions is stored in a storage medium or the like in a form of a program, as an example. The CPU reads such a program into the RAM or the like and executes a process of edition and operation of information, so that various functions are implemented. Note that a program may be installed in advance in a ROM or other storage mediums, a program may be provided in a state of being stored in a computer readable storage medium, or a program may be delivered via a wired or wireless communication unit. The computer readable storage medium is a magnetic disk, a magneto-optical disk, a CD-ROM, a DVD-ROM, a semiconductor memory, or the like.

The control unit 120 is further connected to a conveyance instruction unit 110. The conveyance instruction unit 110 is programed in a control unit (not illustrated) of the sheet processing apparatuses 101 and 102, for example. The conveyance instruction unit 110 transmits, to the control unit 120 of the sheet conveyance apparatus 100, an accumulation instruction signal AS for accumulating the sheet S without conveying the sheet S from the sheet accumulation area 15 and a conveyance instruction signal CS for conveying the sheet S from the sheet accumulation area 15.

The control unit 120 includes a counter unit 111, a first determination unit 112, a second determination unit 113, and a conveyance control unit 114. The counter unit 111, the first determination unit 112, the second determination unit 113, and the conveyance control unit 114 are controlled by a control program stored in the control unit 120.

The counter unit 111 is configured to count the sheets S fed into the sheet accumulation area 15 by using the feed-in sensor 18, and count the sheets S fed out of the sheet accumulation area 15 by the feed-out sensor 19. Then, based on the difference between the counts, the counter unit 111 is configured to count the number of sheets S currently accumulated in the sheet accumulation area 15.

The first determination unit 112 is configured to determine, based on the count of the sheets S by the counter unit 111, whether the number of sheets S currently accumulated in the sheet accumulation area 15 is two or greater, or one.

The second determination unit 113 determines, in response to receiving a signal indicating the end of process from the conveyance instruction unit 110, that the sheet S accumulated in the sheet accumulation area 15 is the final sheet FS to be processed. Further, in response to receiving information on the number of sheets S to be processed from the conveyance instruction unit 110, the second determination unit 113 determines, based on the count of sheets S received from the counter unit 111, whether or not the sheet S accumulated in the sheet accumulation area 15 is the final sheet FS to be processed. For example, when the number of sheets S to be processed is 10, the tenth sheet S conveyed from the sheet accumulation area 15 is determined to be the final sheet FS.

The conveyance control unit 114 is configured to control driving of the belt drive mechanism 4 and the suction switch mechanism 7. When conveying the sheet S from the sheet accumulation area 15, the conveyance control unit 114 controls the shutter 11b to open to adsorb the sheet S on the conveying face 3b of the conveying belts 3 and controls the conveying belts 3 to rotate. On the other hand, when accumulating the sheet S in the sheet accumulation area 15, the conveyance control unit 114 controls the shutter 11b to close and controls the conveying belts 3 not to rotate.

### [Operation]

The operation of the sheet conveyance apparatus 100 will be described with reference to Fig. 4 and Fig. 5.

The sheet conveyance apparatus 100 receives the accumulation instruction AS and the conveyance instruction CS from the conveyance instruction unit 110 (step S1). In response to receiving the accumulation instruction AS from the conveyance instruction unit 110, the sheet conveyance apparatus 100 accumulates the sheet S from the feed-in roller 13 in the sheet accumulation area 15 and does not convey the sheet S from the sheet accumulation area 15 (step S2).

In response to receiving the conveyance instruction CS from the conveyance instruction unit 110, the sheet conveyance apparatus 100 determines by the first determination unit 112 whether or not the number of sheets S currently accumulated in the sheet accumulation area 15 is two or greater, or one (step S3) .

If the number of sheets S currently accumulated in the sheet accumulation area 15 is two or greater, the sheet conveyance apparatus 100 conveys the sheet S from the sheet accumulation area 15 as illustrated in Fig. 4A (step S4).

If the number of sheets S currently accumulated in the sheet accumulation area 15 is one, the sheet conveyance apparatus 100 determines by the second determination unit 113 whether or not the sheet S accumulated in the sheet accumulation area 15 is the final sheet FS to be processed (step S5).

If the one sheet S accumulated in the sheet accumulation area 15 is not the final sheet FS to be processed even when the conveyance instruction CS is received from the conveyance instruction unit 110, the sheet conveyance apparatus 100 leaves the one sheet S in the sheet accumulation area 15 without conveying the sheet S from the sheet accumulation area 15 (step S6) .

As illustrated in Fig. 4B, the one sheet S left in the sheet accumulation area 15 is used as a skid sheet KS, the sheet S fed in from the feed-in roller 13 slides on the one left sheet S (a skid sheet KS) and is accumulated in the sheet accumulation area 15. Since the friction coefficient of the sheet S (skid sheet KS) is not higher than the conveying belts 3, the next sheet S can smoothly enter the sheet accumulation area 15 without being caught by the conveying belts 3.

After two sheets S are accumulated in the sheet accumulation area 15, the first determination unit determines that the number of sheets S currently accumulated in the sheet accumulation area 15 is two or greater (step S3). Then, as illustrated in Fig. 4C, the sheet conveyance apparatus 100 conveys the sheet S used as the skid sheet KS from the sheet accumulation area 15 (step S4).

If it is determined by the first determination unit 112 that the number of sheets S currently accumulated in the sheet accumulation area 15 is one (step S3) and it is determined by the second determination unit 113 that the one sheet S accumulated in the sheet accumulation area 15 is the final sheet FS to be processed, the sheet conveyance apparatus 100 conveys the sheet S from the sheet accumulation area 15 (step S7). This is because no next sheet S is fed into the sheet accumulation area 15 and it is thus not necessary to leave the one sheet S in the sheet accumulation area 15 as the skid sheet KS.

The advantageous effects of the present embodiment will be described.

If the sheet S accumulated in the sheet accumulation area 15 is not the final sheet FS to be processed even when the conveyance instruction CS is received from the conveyance instruction unit 110, the sheet conveyance apparatus 100 leaves one sheet S in the sheet accumulation area 15 without conveying the sheet S from the sheet accumulation area 15.

The one sheet S left in the sheet accumulation area 15 is used as the skid sheet KS, and the next sheet S fed in from the feed-in roller 13 slides on the one left sheet S (skid sheet KS) and is accumulated in the sheet accumulation area 15. As a result, the sheet S can enter the sheet accumulation area 15 without being caught by the conveying belts 3.

Although the preferred embodiment of the present invention has been described above, the configuration of the present invention is not limited to this embodiment.

For example, the suction switch mechanism 7 may have a path connected between the suction box 11 and the suction fan 12, and a closure mechanism that opens and closes the path. The path may be opened or closed by the closure mechanism to switch whether or not to suck the sheet S on the conveying belts 3 through the airflow holes 3a in the conveying belts 3. Further, with respect to the suction switch mechanism 7, no suction box 11 may be provided, and the suction fan 12 and the airflow holes 3a of the endless conveying belts 3 may be directly connected via a path.

Further, although the present embodiment has been described by using the conveying belts 3, the present invention is not limited thereto, and any conveying unit such as a conveying roller, for example, may be employed.

### [Reference Signs List]

- 3: conveying belt (conveying unit)
- 3a: airflow hole
- 3b: conveying face
- 3c: upper section
- 3d: lower section
- 4: belt drive mechanism
- 11: suction box
- 11a: intake hole
- 11b: shutter
- 12: suction fan (intake source)
- 14: stopper plate
- 15: sheet accumulation area
- 7: suction switch mechanism
- 120: control unit
- 110: conveyance instruction unit
- 111: counter unit
- 112: first determination unit
- 113: second determination unit
- 114: conveyance control unit
- S: sheet
- FS: final sheet
- KS: skid sheet

## Claims

1. A sheet conveyance apparatus (100) that conveys a sheet fed out of an upstream sheet processing apparatus (101) to a downstream sheet processing apparatus (102), the sheet conveyance apparatus (100) comprising:
a conveying unit (3) configured to convey the sheet (S);
a conveying unit drive mechanism (4) configured to drive the conveying unit (3);
a sheet accumulation area (15) in which the sheet (S) fed out of the upstream sheet processing apparatus (101) is accumulated on the conveying unit (3); and
a control unit (120) configured to control conveyance of the sheet (S) performed by the conveying unit (3),
wherein the control unit (120) includes a counter unit (111) configured to count a number of sheets (S) accumulated in the sheet accumulation area (15),
**characterised in that**
when a conveyance instruction signal for conveying the sheet (S) from the sheet accumulation area (15) is received and the number of the sheets currently accumulated in the sheet accumulation area (15) is counted to be one by the counter unit (111), the control unit (120) stops conveyance of the one sheet (S) without conveying the one sheet (S) from the sheet accumulation area (15) until a next sheet is guided onto the one sheet (S).

2. The sheet conveyance apparatus according to claim 1,
wherein the control unit comprises a sheet number determination unit (112) configured to determine, based on a count of the sheets by the counter unit (111), whether the number of the sheets currently accumulated in the sheet accumulation area (15) is two or greater, or one, and
when it is determined by the sheet number determination unit (112) that the number of the sheets currently accumulated in the sheet accumulation area (15) is two or greater, the control unit (120) conveys the sheet (S) from the sheet accumulation area (15).

3. The sheet conveyance apparatus according to claim 1 or 2,
wherein the control unit (120) comprises a final sheet determination unit(113) that determines whether or not the sheet (S) currently accumulated in the sheet accumulation area (15) is a final sheet (FS) to be processed, and
when it is determined by a final sheet determination unit (113) that the sheet currently accumulated in the sheet accumulation area (15) is the final sheet (FS) to be processed, the control unit (120) performs control to convey the sheet (S) from the sheet accumulation area (15).

4. The sheet conveyance apparatus according to claim 3, wherein in response to receiving information on the number of the sheets (S) to be processed from the upstream sheet processing apparatus (101), the final sheet determination unit (113) determines, based on the count of the sheets (S) by the counter unit (111), whether or not the sheet accumulated in the sheet accumulation area (15) is the final sheet (FS) to be processed.

5. The sheet conveyance apparatus according to any one of claims 1 to 4, wherein an airflow hole (3a) is formed in the conveying unit (3), and
the sheet conveyance apparatus further comprises a suction switch mechanism (7) configured to switch whether or not to suck the sheet (S) on the conveying unit (3) through the airflow hole (3a).

6. A control method of a sheet conveyance apparatus (100) that conveys a sheet (S) fed out of an upstream sheet processing apparatus (101) to a downstream sheet processing apparatus (102),
wherein the sheet conveyance apparatus (100) comprises
a conveying unit (3) that conveys the sheet (S),
a conveying unit drive mechanism (4) that drives the conveying unit (3), and
a sheet accumulation area (15) in which the sheet (S) fed out of the upstream sheet processing apparatus (101) is accumulated on the conveying unit (3),
the control method **characterised by** comprising:
when a conveyance instruction signal for conveying the sheet (S) from the sheet accumulation area (15) is received and the number of sheets (S) currently accumulated in the sheet accumulation area (15) is counted to be one, stopping conveyance of the one sheet (S) without conveying the one sheet (S) from the sheet accumulation area (15) until a next sheet (S) is guided onto the one sheet (S).

7. A non-transitory computer readable storage medium storing a control program that causes the control unit (120) comprised in the sheet conveyance apparatus (100) according to any one of claims 1 to 5 to control said sheet conveyance apparatus (100) in accordance with the control method according to claim 6.

## Patentansprüche

1. Blattfördervorrichtung (100), die ein aus einer vorgeschalteten Blattverarbeitungseinrichtung (101) ausgegebenes Blatt zu einer nachgeschalteten Blattverarbeitungseinrichtung (102) befördert, wobei die Blattfördervorrichtung (100) umfasst:
eine Fördereinheit (3), die dazu eingerichtet ist, das Blatt (S) zu befördern;
einen Fördereinheit-Antriebsmechanismus (4), der für den Antrieb der Fördereinheit (3) ausgebildet ist;
einen Blattsammelbereich (15), in welchem das aus der vorgeschalteten Blattverarbeitungseinrichtung (101) ausgegebene Blatt auf der Fördereinheit (3) gesammelt wird; und
eine Steuereinheit (120), die zum Steuern der durch die Fördereinheit (3) durchgeführte Beförderung des Blatts (S) eingerichtet ist,
wobei die Steuereinheit (120) eine Zählereinheit (111) aufweist, die dazu eingerichtet ist, eine Anzahl von in dem Blattsammelbereich (15) gesammelten Blättern (S) zu zählen, **dadurch gekennzeichnet, dass**
bei Empfang eines Beförderungsanweisungssignals zum Befördern des Blatts (S) aus dem Blattsammelbereich (15) und wenn die von der Zähleinheit (111) gezählten Anzahl der aktuell in dem Blattsammelbereich (15) gesammelten Blätter eins beträgt, stoppt die Steuereinheit (120) die Beförderung eines Blatts (S), ohne dieses eine Blatt (S) aus dem Blattsammelbereich (15) zu befördern, bis ein nächstes Blatt auf dieses eine Blatt (S) geführt wird.

2. Blattfördervorrichtung nach Anspruch 1,
wobei die Steuereinheit eine Blattzahl-Ermittlungseinheit (112) umfasst, die dazu eingerichtet ist, auf der Basis der Zählung der Blätter durch die Zähleinheit (111) zu ermitteln, ob die Anzahl der aktuell gesammelten Blätter in dem Blattsammelbereich (15) zwei oder größer oder eins beträgt, und wobei
die Steuereinheit (120) das Blatt (S) aus dem Blattspeicherbereich (15) befördert, wenn die Blattzahl-Ermittlungseinheit (112) feststellt, dass die Anzahl der aktuell in dem Blattsammelbereich (15) gesammelten Blätter zwei oder größer ist.

3. Blattfördervorrichtung nach Anspruch 1 oder 2,
wobei die Steuereinheit (120) eine Schlussblatt-Ermittlungseinheit (113) umfasst, die ermittelt, ob das aktuell in dem Blattsammelbereich (15) gesammelte Blatt (S) ein letztes zu verarbeitenden Blatt (FS) ist oder nicht, und
wobei die Steuereinheit (120) eine Steuerung zum Befördern des Blatts (S) aus dem Blattsammelbereich (15) durchführt, wenn von einer Schlussblatt-Ermittlungseinheit (113) festgestellt wird, dass das aktuell in dem Blattsammelbereich (15) gesammelte Blatt das letzte zu verarbeitende Blatt (FS) ist.

4. Blattfördervorrichtung nach Anspruch 3,
wobei in Reaktion auf den Empfang von Informationen über die Anzahl von zu verarbeitenden Blättern (S) von der vorgeschalteten Blattverarbeitungseinrichtung (101) die Schlussblatt-Ermittlungseinrichtung (113) basierend auf der Zählung der Blätter (S) durch die Zähleinheit (111) ermittelt, ob das in dem Blattsammelbereich (15) gesammelte Blatt das letzte zu verarbeitende Blatt (FS) ist.

5. Blattfördervorrichtung nach einem der Ansprüche 1 bis 4,
wobei in der Fördereinheit (3) eine Luftströmungsöffnung (3a) gebildet ist und
wobei die Blattfördervorrichtung einen Ansaugschaltmechanismus (7) umfasst, der eingerichtet ist zum Schalten, ob das Blatt (S) auf der Fördereinheit (3) durch die Luftansaugöffnung (3a) anzusaugen ist oder nicht.

6. Steuerverfahren einer Blattfördervorrichtung (100), die ein aus einer vorgeschalteten Blattverarbeitungseinrichtung (101) ausgegebenes Blatt zu einer nachgeschalteten Blattverarbeitungseinrichtung (102) befördert,
wobei die Blattfördervorrichtung (100) eine Fördereinheit (3) umfasst, die das Blatt (S) befördert,
einen Fördereinheit-Antriebsmechanismus (4), der die Fördereinheit (3) antreibt, und
einen Blattsammelbereich (15), in welchem das aus der vorgeschalteten Verarbeitungseinrichtung (101) beförderte Blatt (2) auf der Fördereinheit (3) gesammelt wird,
wobei das Steuerverfahren **dadurch gekennzeichnet ist, dass** dieses umfasst:
bei Empfang eines Beförderungsanweisungssignals zum Befördern des Blatts (S) aus dem Blattsammelbereich (15) und wenn die von der Zähleinheit (111) gezählte Anzahl der aktuell in dem Blattsammelbereich (15) gesammelten Blätter (S) eins beträgt, Stoppen der Beförderung des einen Blatts (S), ohne dieses eine Blatt (S) aus dem Blattsammelbereich (15) zu befördern, bis ein nächstes Blatt (S) auf dieses eine Blatt (S) geführt wird.

7. Nichtflüchtiges computerlesbares Speichermedium, welches ein Steuerungsprogramm speichert, das die in der Blattbeförderungsvorrichtung (100) nach einem der Ansprüche 1 bis 5 enthaltene Steuereinheit (120) zum Steuern der Blattfördervorrichtung (100) gemäß dem Steuerverfahren nach Anspruch 6 veranlasst.

## Revendications

1. Appareil de transport de feuilles (100) qui transporte une feuille sortie d'un dispositif de traitement de feuilles amont (101) vers un dispositif de traitement de feuilles aval (102), le dispositif de transport de feuilles (100) comprenant:
une unité de transport (3) conçue pour transporter la feuille (S);
un mécanisme d'entraînement d'unité de transport (4) conçu pour entraîner l'unité de transport (3);
une zone de collecte de feuilles (15) dans laquelle la feuille délivrée par le dispositif de traitement de feuilles amont (101) est collectée sur l'unité de transport (3); et
une unité de commande (120) agencée pour commander le transport de la feuille (S) effectué par l'unité de transport (3),
dans lequel l'unité de commande (120) comprend une unité de comptage (111) conçue pour compter un nombre de feuilles (S) collectées dans la zone de collecte de feuilles (15), **caractérisé en ce que**
à la réception d'un signal d'instruction de transport pour transporter la feuille (S) hors de la zone d'accumulation de feuilles (15) et lorsque le nombre de feuilles actuellement accumulées dans la zone d'accumulation de feuilles (15) compté par l'unité de comptage (111) est égal à un, l'unité de commande (120) arrête le transport d'une feuille (S) sans transporter cette feuille (S) hors de la zone d'accumulation de feuilles (15) jusqu'à ce qu'une feuille suivante soit guidée sur cette feuille (S).

2. Appareil de transport de feuilles selon la revendication 1,
dans lequel l'unité de commande comprend une unité de détermination du nombre de feuilles (112) agencée pour déterminer, sur la base du comptage des feuilles par l'unité de comptage (111), si le nombre de feuilles actuellement collectées dans la zone de collecte de feuilles (15) est égal à deux ou supérieur ou égal à un, et dans lequel
l'unité de commande (120) transporte la feuille (S) hors de la zone de stockage de feuilles (15) lorsque l'unité de détermination du nombre de feuilles (112) détermine que le nombre de feuilles actuellement collectées dans la zone de collecte de feuilles (15) est égal ou supérieur à deux.

3. Appareil de transport de feuilles selon la revendication 1 ou 2,
dans lequel l'unité de commande (120) comprend une unité de détermination de feuille finale (113) qui détermine si la feuille (S) actuellement collectée dans la zone de collecte de feuilles (15) est ou non une dernière feuille (FS) à traiter, et
dans lequel l'unité de commande (120) exécute une commande pour transporter la feuille (S) hors de la zone d'accumulation de feuilles (15) lorsqu'il est déterminé par une unité de détection de feuille finale (113) que la feuille actuellement accumulée dans la zone d'accumulation de feuilles (15) est la dernière feuille (FS) à traiter.

4. Appareil de transport de feuilles selon la revendication 3,
dans lequel, en réponse à la réception d'informations sur le nombre de feuilles (S) à traiter provenant du moyen de traitement de feuilles amont (101), le dispositif de détermination de feuille finale (113) détermine si la feuille collectée dans la zone de collecte de feuilles (15) est la dernière feuille (FS) à traiter, sur la base du comptage des feuilles (S) par l'unité de comptage (111).

5. Appareil de transport de feuilles selon l'une quelconque des revendications 1 à 4,
dans lequel une ouverture d'écoulement d'air (3a) est formée dans l'unité de transport (3), et
dans lequel le dispositif de transport de feuilles comprend un mécanisme de commutation d'aspiration (7) adapté pour commuter si la feuille (S) sur l'unité de transport (3) doit être aspirée ou non à travers l'ouverture d'aspiration d'air (3a).

6. Procédé de commande d'un appareil de transport de feuilles (100) qui transporte une feuille sortie d'un dispositif de traitement de feuilles amont (101) vers un dispositif de traitement de feuilles aval (102),
dans lequel l'appareil de transport de feuilles (100) comprend une unité de transport (3) qui transporte la feuille (S),
un mécanisme d'entraînement d'unité de transport (4) qui entraîne l'unité de transport (3), et
une zone de collecte de feuilles (15) dans laquelle la feuille (2) transportée hors du dispositif de traitement amont (101) est collectée sur l'unité de transport (3),
le procédé de commande étant **caractérisé en ce qu'**il comprend :
à la réception d'un signal d'instruction de transport pour transporter la feuille (S) hors de la zone d'accumulation de feuilles (15) et lorsque le nombre de feuilles (S) actuellement accumulées dans la zone d'accumulation de feuilles (15), compté par l'unité de comptage (111), est égal à un, arrêter le transport de ladite une feuille (S) sans transporter ladite une feuille (S) hors de la zone d'accumulation de feuilles (15) jusqu'à ce qu'une feuille suivante (S) soit guidée sur ladite une feuille (S).

7. Support de stockage non volatile lisible par ordinateur qui stocke un programme de commande qui amène l'unité de commande (120) contenue dans l'appareil de transport de feuilles (100) selon l'une quelconque des revendications 1 à 5 à commander l'appareil de transport de feuilles (100) conformément au procédé de commande selon la revendication 6.
